# EUROPÄISCHE PATENTANMELDUNG

(11) **EP 4 368 784 A1**
(43) Veröffentlichungstag der Anmeldung: **15.05.2024**
(21) Anmeldenummer: 23199355.1
(22) Anmeldetag: 25.09.2023
(51) Int. Cl.: E03C 1/04, F16K 11/044

(54) **SANITÄRES EINBAUTEIL UND SANITÄRARMATUR**

(30) Priorität: 08.11.2022 DE 202022106267 U
(71) Anmelder: Neoperl GmbH, 79379 Müllheim (DE)
(72) Erfinder: Oehler, Philipp, 79189 Bad Krozingen (DE); Fangmeier, Martin, 79424 Auggen (DE); Meyer, Burkhard, 79426 Buggingen (DE); Hauth, Matthias, 79674 Todtnau/Muggenbrunn (DE)
(74) Vertreter: Mertzlufft-Paufler, Cornelius

(57) **Zusammenfassung**

Es wird somit ein sanitäres Einbauteil (1) vorgeschlagen, welches beispielsweise als ein Ventil (2) und/oder ein Umstellventil (3) ausgeführt ist, und welches ein Gehäuse (4) und wenigstens eine an dem Gehäuse (4) ausgebildete Anlagefläche (5, 6) aufweist, über die eine mechanische Spannung in das Gehäuse (4) einbringbar ist, und wobei das Gehäuse (4) wenigstens einen Oberteil (50, 150) und wenigstens einen Unterteil (51, 151) aufweist, und wobei in einer Lücke (52, 54) zwischen dem Oberteil (50, 150) und dem Unterteil (51, 151) wenigstens eine Durchströmöffnung (40, 53, 55) ausgebildet ist, und wobei die Lücke (52, 54) von wenigstens einer Stützstrebe (56, 57, 68, 69) überbrückt ist, und wobei die Stützstrebe (56, 57, 68, 69) wenigstens einen oberen Befestigungsbereich (58, 59) an dem Oberteil (50, 150) und wenigstens einen unteren Befestigungsbereich (60, 61) an dem Unterteil (51, 151) aufweist, und wobei die Befestigungsbereiche (58, 59, 60, 61, 70, 71) der Stützstrebe (56, 57, 68, 69) voneinander abweichende Umfangsabschnitte (62, 63, 64, 65) überdecken. Ferner wird eine Sanitärarmatur (100) mit einem erfindungsgemäßen sanitären Einbauteil (1) vorgeschlagen (vgl. Fig. 1).

## Beschreibung

Die Erfindung betrifft ein sanitäres Einbauteil mit einem Gehäuse und wenigstens einer an dem Gehäuse ausgebildeten Anlagefläche, über die eine mechanische Spannung in das Gehäuse einbringbar ist, wobei das Gehäuse wenigstens einen Oberteil und wenigstens einen Unterteil aufweist, wobei in einer Lücke zwischen dem Oberteil und dem Unterteil wenigstens eine Durchströmöffnung ausgebildet ist, wobei die Lücke von wenigstens einer Stützstrebe überbrückt ist, wobei die Stützstrebe wenigstens einen oberen Befestigungsbereich an dem Oberteil und wenigstens einen unteren Befestigungsbereich an dem Unterteil aufweist.

Die Erfindung betrifft weiter eine Sanitärarmatur mit einem sanitären Einbauteil der eingangs beschriebenen Art.

Bei derartigen Einbauteilen kann es sich beispielsweise um Ventile, insbesondere um Umstellventile oder Umsteller handeln. Hierbei sind die Durchströmöffnungen entweder für einen Zufluss oder einen Abfluss eines Fluids, insbesondere Wasser, vorgesehen, wobei diese Strömungen von außen durch die Gehäusewandung in das Innere des Einbauteils geleitet werden.

Hierbei ist es üblich, derartige sanitäre Einbauteile in der jeweiligen Einbausituation zum Verspannen. Hierbei soll ein dichter Abschluss des Gehäuses gegen eine aufnehmende Fläche erreicht werden. Hierbei können teils erhebliche Spannungen axialer und tordierender Art in das Gehäuse eingebracht werden, so dass die Gefahr eines Bruchs des Gehäuses oder einer Deformation des Gehäuses besteht.

Die Aufgabe der Erfindung besteht darin, die mechanische Festigkeit des Gehäuses zu verbessern.

Zur Lösung der genannten Aufgabe sind erfindungsgemäß die Merkmale des Anspruchs 1 vorgesehen. Insbesondere wird somit zur Lösung der genannten Aufgabe bei sanitären Einbauteilen der eingangs beschriebenen Art erfindungsgemäß vorgeschlagen, dass die Befestigungsbereiche der Stützstrebe voneinander abweichende Umfangsabschnitte überdecken.

Somit kann eine Schrägstellung zumindest einer seitlichen Begrenzung der Stützstrebe erreicht werden, womit sich sowohl Axialkräfte als auch Drehmomente und tordierende Kräfte, besser übertragen lassen. Diese Kräfte können somit von den weiteren Strukturen des sanitären Einbauteils aufgenommen werden.

Die mechanische Festigkeit und die Belastbarkeit des Gehäuses wird somit vergrößert.

Beispielsweise kann ein sanitäres Einbauteil mehrere und/oder verschiedene Arten von Stützstreben aufweisen. Diese Stützstreben können jeweils gemäß einem oder mehrerer Ansprüche und/oder einer oder mehrerer beschriebener Ausführungsformen ausgestaltet sein.

Bei einer vorteilhaften Ausgestaltung kann vorgesehen sein, dass eine seitliche Begrenzung der Stützstrebe gegenüber einer Axialrichtung des Einbauteils schräggestellt ist. Hierbei kann es sich insbesondere um die Richtung der Längsmittelachse des Einbauteils handeln. Alternativ oder zusätzlich kann vorgesehen sein, dass eine seitliche Begrenzung der Stützstrebe gegenüber einer Durchströmrichtung eines Fluids schräggestellt ist. Bei dem Fluid handelt es sich vorzugweise um Wasser.

Somit ist die Schrägstellung der seitlichen Begrenzung genauer definiert. Die Schrägstellung der seitlichen Begrenzung ergibt sich hierbei unter anderem daraus, dass die Befestigungsbereiche der Stützstrebe voneinander abweichende Umfangsabschnitte überdecken. Die seitliche Begrenzung kann hierbei beispielsweise eine Außenseite der Stützstrebe sein, die in Umfangsrichtung orientiert sein kann. Hierbei kann eine seitliche Begrenzung auch eine Kante einer Stützstrebe und/oder linienförmig sein.

Bei einer vorteilhaften Ausgestaltung kann vorgesehen sein, dass zwei gegeneinandergestellte Stützstreben ausgebildet sind. Zusätzlich kann vorgesehen sein, dass die Stützstreben sich vereinigen. Alternativ oder zusätzlich hierzu kann vorgesehen sein, dass die Stützstreben wenigstens einen gemeinsamen Befestigungsbereich aufweisen.

Somit kann die Ableitung von Axialkräften und/oder Torsionskräften, beispielsweise in Umfangsrichtung des Einbauteils gerichteten Kräften, optimiert werden. Die Ableitung der Kräfte kann beispielsweise auch auf die übrigen Komponenten des sanitären Einbauteils abgestimmt sein und die mechanische Belastbarkeit und Stabilität des Einbauteils somit vergrößern.

Bei einer vorteilhaften Ausgestaltung kann vorgesehen sein, dass der von dem oberen und/oder unteren Befestigungsbereich überdeckte Umfangsabschnitt innerhalb des von dem jeweils anderen Befestigungsbereich überdeckten Umfangsabschnitts liegt. So kann beispielsweise der von dem oberen Befestigungsbereich überdeckte Umfangsabschnitt innerhalb des von dem unteren Befestigungsbereich überdeckten Umfangsabschnitts liegen oder umgekehrt.

Somit ist eine andere Ausgestaltung der Kraftübertragung zwischen dem Oberteil und dem Unterteil als beispielsweise bei gegeneinander gestellten Stützstreben realisierbar.

Bei einer vorteilhaften Ausgestaltung kann vorgesehen sein, dass die Höhe einer Stützstrebe wenigstens 150 % ihrer Breite beträgt. Die Höhe kann hierbei insbesondere auch wenigstens 175 % und besonders bevorzugt wenigstens 200 % ihrer Breite betragen.

Unter der Höhe einer Stützstrebe kann hierbei insbesondere die Erstreckung der Stützstrebe in axialer Richtung des Einbauteils verstanden werden. Unter der Breite einer Stützstrebe kann hierbei insbesondere die Erstreckung der Stützstrebe in Umfangsrichtung des Einbauteils verstanden werden. Unter der Breite der Stützstrebe kann auch eine Breite einer Projektion der Stützstrebe auf eine planare, die Längsmittelachse des Einbauteils enthaltene, Fläche verstanden werden.

Die Stützstrebe kann somit variabel gestaltet werden, um in optimaler Weise eine Kraftableitung oder Kraftübertragung über die Stützstrebe zwischen den Teilen des sanitären Einbauteils zu gewährleisten.

Bei einer vorteilhaften Ausgestaltung kann vorgesehen sein, dass sich eine, insbesondere die bereits erwähnte, Stützstrebe zu einem ihrer Befestigungsbereiche hin erweitert. Alternativ oder zusätzlich kann vorgesehen sein, dass sich die Stützstrebe zu beiden ihrer Befestigungsbereiche in erweitert. Zusätzlich kann vorgesehen sein, dass sich die Erweiterung über mehr als 15 % der Höhe der Stützstrebe erstreckt. Insbesondere kann sich die Erweiterung über mehr als 20 % der Höhe der Stützstrebe erstrecken. Alternativ oder zusätzlich kann vorgesehen sein, dass sich die Erweiterung über weniger als 20 % der Höhe der Stützstrebe erstreckt. Insbesondere kann sich die Erweiterung über weniger als 30 % der Höhe der Stützstrebe erstrecken.

Unter der Erstreckung der Erweiterung kann hierbei insbesondere der Abstand eines Punktes, an dem die Stützstrebe ihre geringste Breite aufweist, von einem Befestigungsbereich der Stützstrebe verstanden werden. Unter der Erstreckung der Erweiterung kann auch der Abstand eines Befestigungsbereichs von einem Punkt, von dem ausgehend der Betrag einer Steigung einer Konturlinie der Stützstrebe abfällt, gemessen werden.

Somit kann die Einleitung von Kräften von der Stützstrebe über den jeweiligen Befestigungsbereich in den jeweiligen anliegenden Teil des Einbauteils optimiert gestaltet sein.

Bei einer vorteilhaften Ausgestaltung kann vorgesehen sein, dass die eine Stützstrebe in Umfangsrichtung des sanitären Einbauteils begrenzenden Seitenflächen der Stützstrebe gegeneinander um einen Neigungswinkel zwischen 10° und 40°, bevorzugt zwischen 15° und 30° geneigt sind.

Unter dem Neigungswinkel kann hierbei insbesondere der zwischen zwei jeweils eine der Seitenflächen enthaltenden oder tangierenden Ebenen aufgespannte Winkel verstanden werden.

Somit kann die Einleitung von Kräften von der Stützstrebe in den jeweiligen anliegenden Teil des Einbauteils noch weiter optimiert werden.

Bei einer vorteilhaften Ausgestaltung kann vorgesehen sein, dass eine, insbesondere die bereits erwähnte, Stützstrebe eine entlang ihres Verlaufs in axialer Richtung veränderliche Querschnittsfläche aufweist. Bei der Axialrichtung kann es sich insbesondere um die Axialrichtung des sanitären Einbauteils handeln. Die Axialrichtung kann auch die Axialrichtung der Stützstrebe sein.

Somit kann die Form der Stützstrebe vorteilhaft gewählt und auf eine optimale Ableitung von Kräften in die jeweiligen Teile, an denen Stützstrebe befestigt ist, optimiert sein.

Bei einer vorteilhaften Ausgestaltung kann vorgesehen sein, dass mehrere durch ein oder mehrere Mittelteile des Gehäuses getrennte Lücken übereinander angeordnet sind. Bevorzugt können hierbei zwei durch ein Mittelteil des Gehäuses getrennte Lücken übereinander angeordnet sein.

So kann beispielsweise eine Lücke als Einlass und eine Lücke als Auslass für das Fluid dienen. Das Mittelteil kann hierbei an einer oder seinen beiden in Axialrichtung des Einbauteils gerichteten Seiten jeweilige Befestigungsbereiche für Stützstreben aufweisen.

Wird eine bestimmte Lücke betrachtet, stellen jeweilige, beispielsweise näherungsweise zylindrisch geformte, und sich vorzugsweise in Axialrichtung des Einbauteils an die Lücke anschließende Abschnitte des Einbauteils einen jeweiligen Unterteil und einen jeweiligen Oberteil dar. Diese jeweiligen Teile können somit jeweilige Mittelteile enthalten.

Bei einer vorteilhaften Ausgestaltung kann vorgesehen sein, dass ein durch jeweilige Außenseiten der Stützstreben einer jeweiligen Lücke definierter Kreisumfang für mehrere Lücken unterschiedlich groß ist. Zusätzlich kann vorgesehen sein, dass sich die jeweiligen Kreisumfänge in einer Axialrichtung des Einbauteils verkleinern. Alternativ oder zusätzlich hierzu kann vorgesehen sein, dass sich die jeweiligen Kreisumfänge in einer Durchströmrichtung eines Fluids verkleinern.

Die Außenseiten der Stützstreben sind hierbei insbesondere diejenige Seiten, welche das sanitäre Einbauteil im Bereich der Stützstreben nach außen begrenzen und/oder in Radialrichtung des Einbauteils nach außen gerichtet sind. Verglichen werden hierbei jeweils Kreisumfänge durch Punkte gleichen Abstands von einem jeweiligen Ende einer jeweiligen Lücke. Bevorzugt wird ein Kreisumfang durch Mittelpunkte einer jeweiligen Lücke verglichen.

Somit können je nach Einbausituation und somit erzeugten Spannungen axialer und/oder tordierender Art benachbarte Lücken aufeinander abgestimmt werden, um eine bestimmte Krafteinleitung in den Oberteil und/oder den Unterteil des sanitären Einbauteils zu erreichen.

Bei einer vorteilhaften Ausgestaltung kann vorgesehen sein, dass die jeweiligen Höhen mehrerer Lücken voneinander abweichen. Zusätzlich kann vorgesehen sein, dass sich die jeweiligen Höhen mehrerer Lücken in einer Axialrichtung des Einbauteils verkleinern. Alternativ oder zusätzlich hierzu kann vorgesehen sein, dass sich die jeweiligen Höhen mehrerer Lücken in einer Durchströmrichtung eines Fluids verkleinern.

Somit kann beispielsweise Einlässe und Auslässe vorteilhaft gestaltet sein und beispielsweise unterschiedlich große Durchflussöffnungen aufweisen. Durch jeweilige Außenseiten der Stützstreben definierte Kreisumfänge sowie jeweilige Höhen einer jeweiligen Lücke beziehungsweise mehrerer Lücken können hierbei so aufeinander abgestimmt werden, dass Lücken verschiedener Höhe aufgrund verschiedener Kreisumfänge gleich oder verschieden große Durchflussflächen aufweisen. Die Durchflussfläche einer jeweiligen Lücke bestimmt sich hierbei insbesondere als die Summe der Querschnittsflächen der Durchlassöffnungen.

Bei einer vorteilhaften Ausgestaltung vorgesehen sein, dass die jeweiligen Breiten der Stützstreben mehrere Lücken voneinander abweichen. Zusätzlich kann vorgesehen sein, dass sich die jeweiligen Breiten der Stützstreben mehrerer Lücken in einer Axialrichtung des Einbauteils verkleinern. Alternativ oder zusätzlich kann vorgesehen sein, dass sich die jeweiligen Breiten der Stützstreben mehrere Lücken in einer Durchströmrichtung eines Fluids verkleinern.

Hierbei werden insbesondere Breiten der jeweiligen Stützstreben in einem gleichen, jeweiligen Abstand von einem Ende der jeweiligen Lücke miteinander verglichen. Bevorzugt werden hierbei die jeweiligen Mittelpunkte der jeweiligen Lücken betrachtet.

Somit kann die Durchströmöffnung vorteilhaft auf einen gewünschten Fluidstrom hin optimiert werden. Die Stützstreben können auch auf die in die an der Lücke anliegenden Teile abzuleitenden Kräfte beziehungsweise eine bestimmte Art der Krafteinleitung hin abgestimmt werden.

Bei einer vorteilhaften Ausgestaltung kann vorgesehen sein, dass die jeweiligen Tiefen der Stützstreben mehrerer Lücken voneinander abweichen. Zusätzlich kann vorgesehen sein, dass sich die jeweiligen Tiefen der Stützstreben mehrerer Lücken in einer Axialrichtung des Einbauteils vergrößern. Alternativ oder zusätzlich hierzu kann vorgesehen sein, dass sich die jeweiligen Tiefen der Stützstreben verkleinern Lücken in einer Durchströmrichtung eines Fluids vergrößern.

Unter einer Tiefe einer Stützstrebe kann hierbei insbesondere eine Ausdehnung der Stützstrebe in radialer Richtung des Einbauteils verstanden werden. Verglichen werden beispielsweise jeweils Tiefen der Stützstreben mehrere Lücken an jeweiligen Punkten gleichen Abstands von einem jeweiligen Ende der jeweiligen Lücke. Bevorzugt werden hierbei die jeweiligen Mittelpunkte der jeweiligen Lücken betrachtet.

Bei einer vorteilhaften Ausgestaltung kann vorgesehen sein, dass die Längsmittelachsen wenigstens zweier im selben Umfangsbereich des Einbauteils befindlicher Stützstreben wenigstens zweier Lücken parallel zueinander ausgerichtet sind. Hierbei handelt es sich bevorzugt um benachbarte Lücken handeln.

Der Umfangsbereich kann hierbei insbesondere ein innerhalb eines Kreiszylindersektors befindliche Teil des sanitären Einbauteils sein. Insbesondere ist erstreckt sich die Höhe des Kreiszylindersektors entlang der Längsmittelachse des sanitären Einbauteils bis zu den jeweiligen Enden des Einbauteils. Somit können sich auch radial zueinander versetzte Stützstreben im selben Umfangsbereich des sanitären Einbauteils befinden. Hierbei können die Längsmittelachsen der hierbei betrachteten Stützstreben parallel zur Längsmittelachse des sanitären Einbauteils und durch wenigstens einen von ihren jeweiligen Außenseiten am weitesten entfernten Punkt innerhalb der jeweiligen Stützstrebe verlaufen.

Somit kann eine vorteilhafte Kraftübertragung zwischen den verschiedenen Teilen des sanitären Einbauteils erreicht werden.

Bei einer vorteilhaften Ausgestaltung kann vorgesehen sein, dass das Einbauteil mittels eines Spritzgussverfahrens gefertigt ist.

Somit kann eine erfindungsgemäßes sanitäres Einbauteil kostengünstig hergestellt sein.

Bei einer vorteilhaften Ausgestaltung kann vorgesehen sein, dass das Einbauteil als Umstellventil ausgebildet ist. Somit können die aufgeführten Vorteile erfindungsgemäßer sanitärer Einbauteile bei Umstellventilen realisiert werden.

Bei einer vorteilhaften Ausgestaltung kann vorgesehen sein, dass ein Einlass und/oder Auslass des Einbauteils radial zu der Längsmittelachse des Einbauteils ausgerichtet ist.

Bei dem Einlass und/oder dem Auslass kann es sich hierbei insbesondere um die zwischen einem jeweiligen Oberteil und einem jeweiligen Unterteil befindliche Lücke handeln.

Alternativ oder zusätzlich hierzu kann vorgesehen sein, dass ein Einlass und/oder Auslass des Einbauteils in Richtung der Längsmittelachse des Einbauteils ausgerichtet ist.

So kann beispielsweise ein weiterer Einlass und/oder Auslass an dem sanitären Einbauteils vorgesehen sein, der beispielsweise in Axialrichtung des Einbauteils gerichtet ist.

Unter der Ausrichtung eines Einlasses und/oder eines Auslasses kann insbesondere die Strömungsrichtung des Fluids bei seinem Durchtritt durch den Öffnungsquerschnitt einer Durchlassöffnung verstanden werden.

Alternativ oder zusätzlich sind zur Lösung der genannten Aufgabe erfindungsgemäß die Merkmale des nebengeordneten, auf eine Sanitärarmatur gerichteten Anspruchs vorgesehen. Insbesondere wird somit zur Lösung der genannten Aufgabe bei Sanitärarmaturen der eingangs beschriebenen Art erfindungsgemäß vorgeschlagen, dass die Sanitärmatur ein erfindungsgemäßes sanitäres Einbauteil aufweist.

Somit können die für erfindungsgemäße sanitäre Einbauteile beschriebenen Vorteile bei Sanitärarmaturen realisiert werden.

Die Erfindung wird nun anhand von Ausführungsbeispielen im Rahmen einer Zusammenschau der Figuren näher beschrieben, ist jedoch nicht auf die Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele. Funktionell und/oder konstruktiv gleichartige oder identische Bauteile und Funktionseinheiten sind stellenweise mit denselben Bezugszeichen bezeichnet und nicht wiederholt beschrieben.

Es zeigen:
- Figur 1: ein erfindungsgemäßes sanitäres Einbauteil in einer perspektivischen, teilweisen Schnittansicht mit zwei vergrößert dargestellten Abschnitten des sanitären Einbauteils,
- Figur 2: das sanitäre Einbauteile aus Figur 1 in einer weiteren perspektivischen Darstellung,
- Figur 3: das sanitäre Einbauteile aus den Figuren 1 und 2 in einer seitlichen Ansicht,
- Figur 4: das sanitäre Einbauteil aus den Figuren 1 bis 3 in einer weiteren seitlichen Ansicht,
- Figur 5: das sanitäre Einbauteil aus den Figuren 1 bis 4 in einer weiteren seitlichen Ansicht,
- Figur 6: eine teilweise geschnittene, perspektivische Ansicht des sanitären Einbauteils aus den Figuren 1 bis 5, welches in eine erfindungsgemäße Sanitärmatur eingesetzt ist, und
- Figur 7: eine Schnittansicht einer Kontaktstelle zwischen dem sanitären Einbauteil und der Sanitärmatur aus Figur 6.

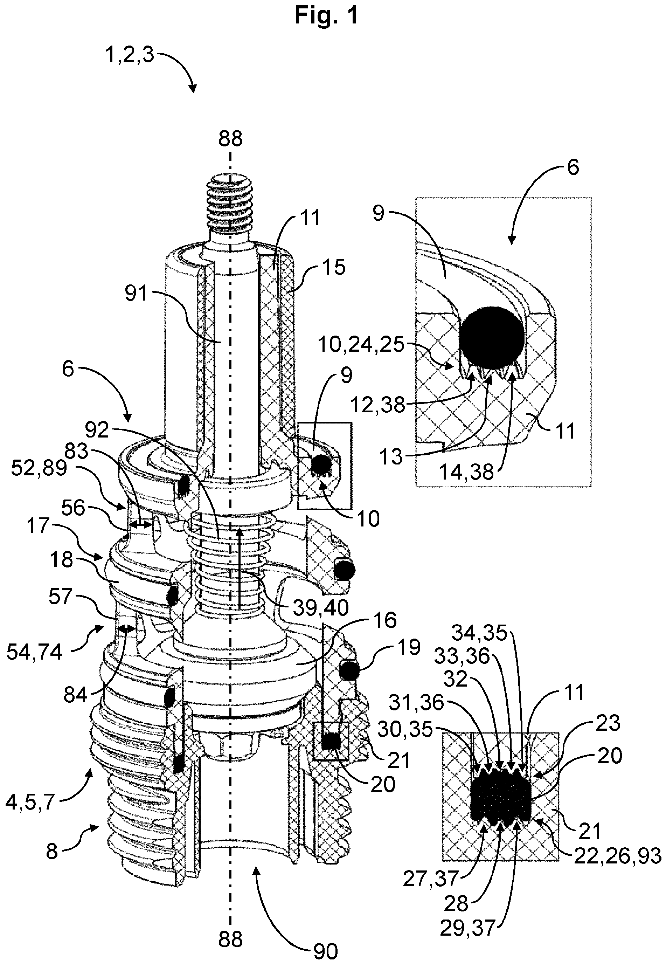

Figur 1 zeigt ein erfindungsgemäßes sanitäres Einbauteil 1, welches als Ventil 2 ausgeführt ist. Genauer definiert ist das Einbauteil 1 als Umstellventil 3 ausgebildet. Das gezeigte Einbauteil 1 ist in diesem Ausführungsbeispiel mittels eines Spritzgussverfahrens gefertigt.

Das Einbauteil 1 verfügt über ein Gehäuse 4 und eine an dem Gehäuse 4 ausgebildete Anlagefläche 5, über die eine mechanische Spannung in das Gehäuse 4 einbringbar ist. Eine weitere Anlagefläche 6 liegt der Anlagefläche 5 gegenüber. Die Anlagefläche 5 wird hierbei durch ein Gewinde 7 gebildet. Benachbart zu dem Gewinde 7 befindet sich ein weiteres Gewinde 8. So lässt sich das Einbauteil 1 mittels des Gewindes 7 in eine Sanitärarmatur 100 einschrauben, wobei ein weiteres, nicht gezeigtes, Sanitärbauteil über das Gewinde 8 anschließbar ist. Die Anlagefläche 6 wird teilweise durch einen als O-Ring ausgeführten Dichtring 9 gebildet, der an einer Auflagefläche 10 an einem Gehäuseteil 11 des sanitären Einbauteils 1 aufliegt.

Die Auflagefläche 10 weist wenigstens eine, nämlich drei Rippen 12, 13, 14 auf. Die Rippen 12, 13, 14 sind hierbei umlaufend ausgeführt. Das Gehäuseteil 11 wird teilweise von einer Hülse 15 umgeben. Jede der Rippen 12, 13, 14 ist innerhalb einer Projektion des Dichtrings 9 auf die Auflagefläche 10 ausgebildet.

Innerhalb des Gehäuseteils 11 des sanitären Einbauteils 1 ist eine Handhabe 91 mit einem Ventilkörper 16 beweglich gelagert.

Während der Dichtring 9 für eine in Bezug auf die Längsmittelachse 88 des Einbauteils 1 axial wirkende Abdichtung ausgebildet ist, ist ein weiterer, an einem Mittelteil 17 ausgebildeter Dichtring 18 für eine radial gerichtete Dichtwirkung ausgeführt. In ähnlicher Weise ist der Dichtring 19 für eine radial gerichtete Abdichtung ausgeführt, wohingegen ein weiterer Dichtring 20 für eine axial wirkende Abdichtung zwischen zwei Gehäuseteilen 11, 21 ausgeführt ist. Bei den Dichtringen 9, 18, 19, 20 handelt es sich jeweils um O-Ringe. Der Dichtring 20 liegt an einer Auflagefläche 22 an dem Gehäuseteil 21 auf und wird gegen eine für den Dichtring 20 an dem Gehäuseteil 11 vorgesehene Gegenfläche 23 gepresst. Der Dichtring 20 ist vollständig durch die Gehäuseteile 11, 21 eingeschlossen.

Die Auflageflächen 10, 22 der Dichtringe 9, 20 sind jeweils Nutgründe 24, 93 einer jeweiligen Nut 25, 26. Dies gilt in analoger Weise auch für weitere Dichtringe 18, 19. Im Bereich um den Dichtring 20, der ausschnittsweise vergrößert dargestellt ist, ist erkennbar, dass sowohl an der Auflagefläche 22 als auch an der Gegenfläche 23 jeweilige Rippen 27, 28, 29, nämlich an der Auflagefläche 22, sowie Rippen 30, 31, 32, 33, 34, nämlich an der Auflagefläche 23, ausgebildet sind. Die Rippen 30 und 34 sowie die Rippen 31 und 33, und die Rippen 27, 29 sind hierbei jeweils mit gleichgroßen Querschnittsflächen 35, 36, 37 ausgeführt. Alle Rippen 12, 13, 14, 27, 28, 29, 30, 31, 32, 33, 34 sind im Ausführungsbeispiel umlaufend ausgeführt.

Der Dichtring 20 ist hierbei ein erster Dichtring an der Auflagefläche 22 des Gehäuseteils 21, der gegen eine Gegenfläche 23 eines weiteren Gehäuseteils 11 gepresst ist, wobei der Dichtring 9 als ein zweiter Dichtring vorgesehen ist, der an einer Auflagefläche 10 mit Rippen 12, 13, 14 aufliegt und zur Abdichtung nach außen ausgebildet ist. Auch die Rippen 12 und 14 weisen hierbei übereinstimmende Querschnittsflächen 38 auf.

Die Dichtringe 9, 20 sind jeweils in Axialrichtung 39 des Einbauteils 1 und jeweils quer zu ihrer jeweiligen Gegenfläche 10, 22 und außerdem in Durchströmrichtung 40 eines Fluids verpresst.

Bei Betrachtung der Bereiche um die Dichtringe 9, 20, welche jeweils vergrößert dargestellt sind, ist erkennbar, dass die Rippe 13 an der Auflagefläche 10, die Rippe 28 an der Auflagefläche 22 und die Rippe 32 an der Gegenfläche 23 zentriert sind. Die Rippen 12, 13, 14 sind über die Auflagefläche 10, die Rippen 27, 28, 29 über die Auflagefläche 22 und die Rippen 30, 31, 32, 33, 34 über die Gegenfläche 23 verteilt.

In den Vergrößerungen der Bereiche um die Dichtringe 9, 20 ist zu erkennen, dass die Rippen 12, 13, 14 der Auflagefläche 10, sowie die Rippen 27, 28, 29 der Auflagefläche 22 sowie die Rippen 30, 31, 32, 33, 34 der Gegenfläche 23 jeweils voneinander abweichende Höhen aufweisen. Diese Höhen sind jeweils von der Auflagefläche 10, 22 bzw. der Gegenfläche 23 ausgehend bestimmt oder gemessen. An der Auflagefläche 10, 22 sind jeweils wenigstens drei Rippen 12, 13, 14 bzw. 27, 28, 29 vorgesehen, wobei jeweils die mittlere Rippe 13, 28 eine geringere Höhe als die äußeren Rippen 12, 14 bzw. 27, 29 aufweist. Dies ist bei der Gegenfläche 23 der Fall, bei der die mittlere Rippe 32 eine geringere Höhe als die nächstliegenden, äußeren Rippen 31, 33 aufweist. Die Rippen 31, 33 weisen auch jeweils eine geringere Höhe als die nächstliegenden äußeren Rippen 30, 34 auf. An der Gegenfläche 20 ist ferner zu erkennen, dass Rippen 30, 34 die Gegenfläche seitlich begrenzen.

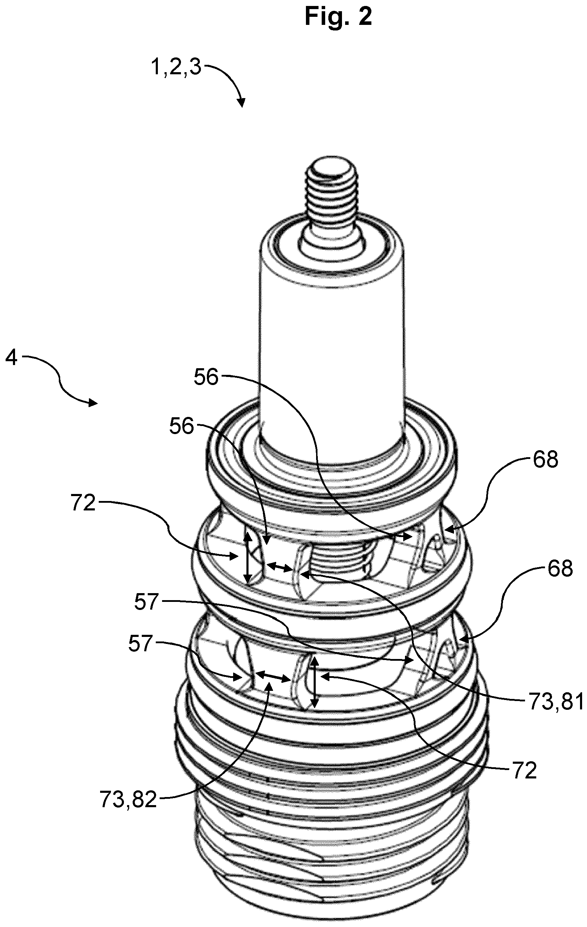

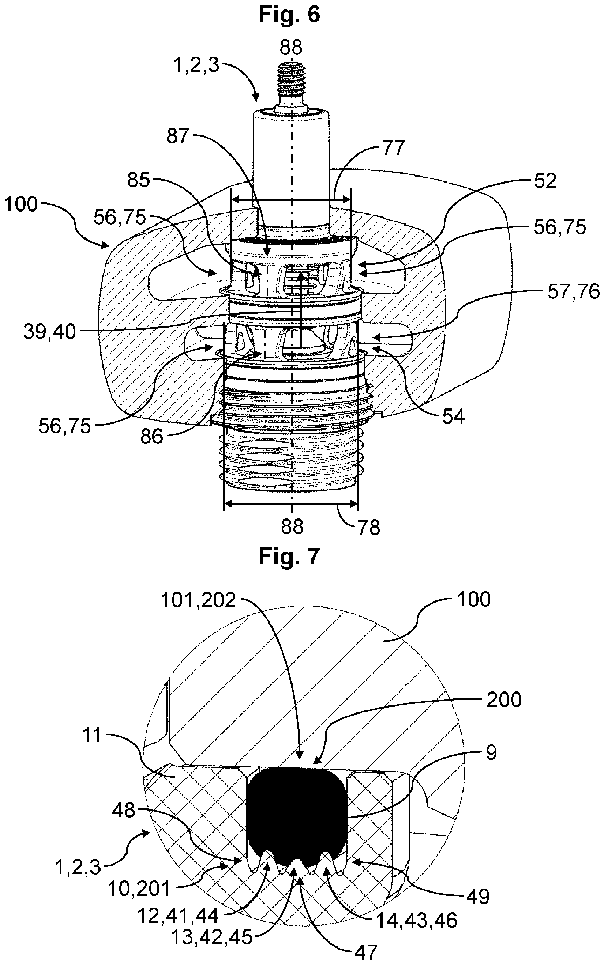

Eine genauere Betrachtung der Verhältnisse im Bereich des Dichtrings 9, der auf den Rippen 12, 13, 14 der Auflagefläche 10 aufliegt, ist anhand der Figur 7 möglich. Figur 7 zeigt eine ausschnittsweise Schnittdarstellung der in Figur 6 dargestellten Situation, in der das sanitäre Einbauteil 1 der Figuren 1 bis 5 in eine Sanitärarmatur 100 eingesetzt ist. Die dort gezeigten Merkmale der Rippen können in analoger Weise durch die Rippen der Auflagefläche 22 bzw. der Gegenfläche 23 erfüllt sein.

Der Dichtring 9 kontaktiert hierbei eine unprofilierte Gegenfläche 101 der Sanitärmatur 100 und bildet eine Dichtverbindung 200 aus. Die Dichtverbindung 200 wird zwischen zwei stationären Teilen 11, 100 gebildet, wobei eines dieser Teile das Gehäuseteil 11 des sanitären Einbauteils 1 ist.

Zwischen diesen Teilen 11, 100 ist ein Dichtring 9 eingelegt und jedes der zwei Teile 11, 100 bildet eine jeweilige Pressfläche 201, 202 aus, wobei die Pressfläche 201 die Auflagefläche 10 des sanitären Einbauteils 1 ist und die Pressfläche 202 die Gegenfläche 101 der Sanitärmatur 100 ist. Wenigstens eine dieser Pressfläche 201, 202, nämlich die an dem sanitären Einbauteil 1 vorgesehene Pressfläche 201, nämlich die Auflagefläche 10, weist hierbei wenigstens eine, nämlich drei Rippen 12, 13, 14 auf, welche umlaufend ausgeführt sind.

Die Rippe 13 ist an der Auflagefläche 10 zentriert. Mehrere, nämlich drei Rippen 12, 13, 14 sind über die Auflagefläche 10 verteilt. Die Höhe 42 der Rippe 13 der Auflagefläche 10 entspricht hierbei der Halbwertsbreite 45 der Rippe 13. Die Halbwertsbreite 44, 45, 46 ist hierbei die Breite der jeweiligen Rippen 12, 13, 14 auf halber Höhe 41, 42, 43 der jeweiligen Rippe 12, 13, 14.

Die Höhen 41, 43 der Rippen 12, 14 weichen jeweils um weniger als 50 % von den Halbwertsbreiten 44, 46 der Rippen 12, 14 ab. Bei einer hier nicht gezeigten Ausführungsform weichen die Höhen der jeweiligen Rippen um weniger als 25 % und/oder weniger als 10 % von den jeweiligen Halbwertsbreiten der jeweiligen Rippen ab.

Ferner ist eine Höhenverteilung der Rippen 12, 13, 14 der Auflagefläche 10 symmetrisch zu der durch die Rippe 13 markierten Mitte 47 der Auflagefläche 10. Die Höhen 41, 42, 43 der Rippen 12, 13, 14 nehmen von der Mitte 47 der Auflagefläche 10 zu einer, genau zu beiden Außenseiten 48, 49 zu.

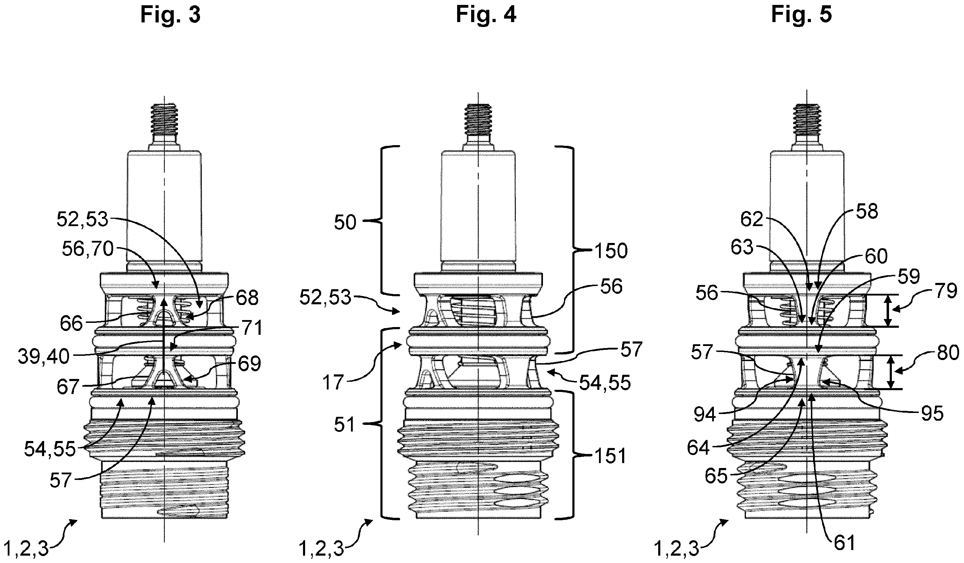

Das Gehäuse 4 verfügt über einen Oberteil 50 und einen Unterteil 51 (vgl. etwa Figur 4). Oberteil 50 und Unterteil 51 sind jeweils Abschnitte des Gehäuses 4, deren Begrenzung innerhalb des Gehäuses 4 frei gewählt werden kann. Bei einem erfindungsgemäßen sanitären Einbauteils 1 sind die Begrenzungen des Oberteils 50 und des Unterteils 51 so festgelegt, dass zwischen dem Oberteil 50 und dem Unterteil 51 eine Lücke 52 vorgesehen ist und dass in der Lücke 52 wenigstens eine Durchströmöffnung 53 ausgebildet ist. Das sanitäre Einbauteil 1 weist neben der Lücke 52 eine weitere Lücke 54 auf, welche ebenfalls wenigstens eine Durchströmöffnung 55 aufweist. Das Mittelteil 17, welches Teil des Gehäuses 4 ist, trennt mehrere, nämlich zwei Lücken 52, 54, welche übereinander angeordnet sind. Je nachdem, welche der Lücken 52, 54 betrachtet wird, ist das Mittelteil 17 Teil des Oberteils 150 oder Teil des Unterteils 51. Es können somit an die jeweiligen Lücken 52, 54 angrenzend verschiedene Oberteile 50, 150 und Unterteile 51, 151 definiert werden. Die Lücken 52, 54 sind jeweils von wenigstens einer Stützstrebe 56, 57 überbrückt und weisen durch die jeweiligen Stützstreben 56, 57 gebildete Durchströmöffnungen 53, 55 auf. Die Durchströmöffnungen 53, 55 können jeweils verschiedene und voneinander abweichende Formen aufweisen, wirken jedoch jeweils in ähnlicher Weise.

Im Ausführungsbeispiel ist die Lücke 54 als Einlass 74 vorgesehen, während die Lücke 52 als Auslass 89 vorgesehen ist. Ein weiterer Auslass 90 ist stirnseitig an dem Einbauteil 1 vorgesehen. Der durch eine jeweilige Lücke 52, 54 gebildete Einlass 74 bzw. Auslass 89 ist radial zu der Längsmittelachse 88 des Einbauteils 1 ausgerichtet. Der stirnseitige Auslass 90 ist parallel zu der Längsmittelachse 88 des Einbauteils 1 ausgerichtet.

Mittels der Handhabe 91 ist der Ventilkörper 16 gegen eine Rückstellkraft eines Rückstellelements 92 aus der in Figur 1 gezeigten Ventilstellung, in der eine fluidische Verbindung zwischen dem Einlass 74 und dem Auslass 89 besteht, in eine Ventilstellung bringbar, in der eine fluidische Verbindung zwischen dem Einlass 74 und dem stirnseitigen Auslass 89 besteht. Das Rückstellelement kann hierbei als Rückstellfeder ausgeführt sein.

Die Durchströmöffnungen 53 der Lücke 52 werden durch die Anordnung der Stützstreben 56 und die Durchströmöffnungen 55 der Lücken 54 durch die Anordnung der Stützstreben 57 gebildet (vgl. etwa die Figuren 3 bis 5). Die Erfindung sieht wenigstens zwei verschiedene Arten von Stützstreben 56, 57 vor. Jede Lücke 52, 54 kann somit von einer oder mehreren Stützstreben 56, 57 überbrückt sein, wobei die Stützstreben 56, 57 in unterschiedlicher Weise, wie im Folgenden noch erläutert, ausgeführt sein können.

Die Stützstreben 56, 57 weisen jeweils wenigstens einen oberen Befestigungsbereich 58, 59 an einem jeweiligen Oberteil 50, 150 und jeweils wenigstens einen unteren Befestigungsbereich 60, 61 an einem jeweiligen Unterteil 51, 151 auf.

Die jeweiligen Befestigungsbereiche 58, 59, 60, 61 der Stützstreben 56, 57 einer jeweiligen Lücke 52, 54 überdecken voneinander abweichende Umfangsabschnitte 62, 63, 64, 65.

Eine seitliche Begrenzung 66, 67 der Stützstrebe 56, 57 ist gegenüber einer Axialrichtung 39 des Einbauteils 1 und gegenüber einer Durchströmrichtung 40 eines Fluids schräggestellt.

Eine mögliche Ausführungsform der Stützstrebe 56, 57 ist besonders in Figur 3 erkennbar und dadurch gebildet, dass jeweils wenigstens eine weitere Stützstrebe 68, 69 ausgebildet ist, und zusammen jeweils zwei gegeneinandergestellte Stützstreben 56, 57, 68, 69 ausgebildet sind. Jeweils zwei gegeneinandergestellte Stützstreben 56, 57, 68, 69 können sich vereinigen, wie dies im Ausführungsbeispiel in einem jeweils oberen Axialbereich des Einbauteils 1 der Fall ist, wo die jeweils zwei gegeneinandergestellten Stützstreben 56, 57, 68, 69 einen gemeinsamen Befestigungsbereich 70, 71 aufweisen.

Eine andere Ausführungsform der Stützstreben 56, 57 ist besonders in Figur 5 erkennbar und dadurch gebildet, dass jeweils eine einzelne Stützstrebe 56, 57 vorgesehen ist. Bei diesen Stützstreben 56, 57 liegt der von dem jeweils unteren Befestigungsbereich 60, 61 überdeckte Umfangsabschnitt 63, 65 innerhalb des von dem jeweils oberen Befestigungsbereich 58, 59 überdeckten Umfangsabschnitts 62, 64. Weiterhin sind hier die die Stützstrebe 57 in Umfangsrichtung des sanitären Einbauteils begrenzenden Seitenflächen 94, 95 der Stützstrebe 57 gegeneinander um einen Neigungswinkel zwischen 10° und 40° und sogar zwischen 15° und 30° geneigt. Ebenso verhält es sich bei der Stützstrebe 56.

In einer nicht gezeigten Ausführungsform liegt der von dem jeweils oberen Befestigungsbereich 58, 59 überdeckte Umfangsabschnitt 62, 64 innerhalb des von dem jeweils unteren Befestigungsbereich 60, 61 überdeckten Umfangsabschnitts 63, 65.

Beispielsweise kann eine Lücke 52, 54 von zwei Paaren jeweils gegeneinandergestellter Stützstreben 56, 57, 68, 69 sowie von zwei einzeln stehenden Stützstreben 56, 57 überbrückt sein.

Im gezeigten Ausführungsbeispiel beträgt außerdem die Höhe 72 einer jeweiligen Stützstrebe 56, 57, 68, 69 wenigstens 150 % ihrer jeweiligen Breite 73. Es sind Ausführungsformen möglich, bei denen die Höhe 72 einer jeweiligen Stützstrebe 56, 57, 68, 69 wenigstens 175 % und/oder wenigstens 200 % ihrer jeweiligen Breite 73 beträgt.

Die Stützstreben 56, 57, 68, 69 erweitern sich jeweils zu ihren Befestigungsbereichen 58, 59, 60, 61, 70, 71 hin und die jeweilige Erweiterung erstreckt sich über jeweils mehr als 15 % der Höhe 72 einer jeweiligen Stützstrebe 56, 57, 68, 69. Die Erweiterung kann sich auch jeweils über mehr als 20 %, und/oder weniger als 20 % und/oder weniger als 30 % der jeweiligen Höhe 72 einer jeweiligen Stützstrebe 56, 57, 68, 69 erstrecken.

Die jeweiligen Stützstreben 56, 57, 68, 69 weisen jeweils eine entlang ihres Verlaufs in Axialrichtung veränderliche Querschnittsfläche auf. Diese Veränderlichkeit ergibt sich beispielsweise daraus, dass sich eine jeweilige Stützstrebe sechsten 56, 57, 68, 69 zu ihrem Befestigungsbereich 58, 59, 60, 61 hin erweitert.

Ein durch jeweilige Außenseiten 75, 76 der Stützstreben 56, 57 einer jeweiligen Lücke 52, 54 definierter Kreisumfang 77, 78 ist für mehrere Lücken 52, 54 unterschiedlich groß, und zwar verkleinern sich die Kreisumfänge 77, 78 in einer Axialrichtung 39 des Einbauteils 1 und in einer Durchströmrichtung 40 eines Fluids. So ist der zur oberen Lücke 52 gehörende Kreisumfang 77 kleiner als der zur unteren Lücke 54 gehörende Kreisumfang 78.

Die jeweiligen Höhen 79, 80 mehrerer Lücken 52, 54 weichen voneinander ab und verkleinern sich in einer Axialrichtung 39 des Einbauteils 1 und einer Durchströmrichtung 40 eines Fluids. So ist die Höhe 79 der oberen Lücke 52 kleiner als die Höhe 80 der unteren Lücke 54.

Die jeweiligen Breiten 81, 82 der Stützstreben 56, 57, 68, 69 mehrerer Lücken 52, 54 weichen voneinander ab und verkleinern sich in einer Axialrichtung 39 des Einbauteils 1 und einer Durchströmrichtung 40 eines Fluids.

Die jeweiligen Tiefen 83, 84 der Stützstreben 56, 57, 68, 69 mehrerer Lücken 52,54 weichen voneinander ab und vergrößern sich in einer Axialrichtung 39 des Einbauteils 1 und einer Durchströmrichtung 40 eines Fluids.

Die Längsmittelachsen 85, 86 wenigstens zweier im selben Umfangsbereich 87 befindlicher Stützstreben 56, 57 wenigstens zweier, in diesem Ausführungsbeispiel benachbarter, Lücken 52, 54 sind außerdem parallel zueinander ausgerichtet. Die Längsmittelachsen 85, 86 sind außerdem parallel zu der Längsmittelachse 88 des Einbauteils 1 ausgerichtet.

Das gezeigte Einbauteil 1 ist in diesem Ausführungsbeispiel mittels eines Spritzgussverfahrens gefertigt.

Es wird somit ein sanitäres Einbauteil 1 vorgeschlagen, welches beispielsweise als ein Ventil 2 und/oder ein Umstellventil 3 ausgeführt ist, und welches ein Gehäuse 4 und wenigstens eine an dem Gehäuse 4 ausgebildete Anlagefläche 5, 6 aufweist, über die eine mechanische Spannung in das Gehäuse 4 einbringbar ist, und wobei das Gehäuse 4 wenigstens einen Oberteil 50, 150 und wenigstens einen Unterteil 51, 151 aufweist, und wobei in einer Lücke 52, 54 zwischen dem Oberteil 50, 150 und dem Unterteil 51, 151 wenigstens eine Durchströmöffnung 40, 53, 55 ausgebildet ist, und wobei die Lücke 52, 54 von wenigstens einer Stützstrebe 56, 57, 68, 69 überbrückt ist, und wobei die Stützstrebe 56, 57, 68, 69 wenigstens einen oberen Befestigungsbereich 58, 59 an dem Oberteil 50, 150 und wenigstens einen unteren Befestigungsbereich 60, 61 an dem Unterteil 51, 151 aufweist, und wobei die Befestigungsbereiche 58, 59, 60, 61, 70, 71 der Stützstrebe 56, 57, 68, 69 voneinander abweichende Umfangsabschnitte 62, 63, 64, 65 überdecken. Ferner wird eine Sanitärarmatur 100 mit einem erfindungsgemäßen sanitären Einbauteil 1 vorgeschlagen, vgl. Fig. 1.

### Bezugszeichenliste

- 1: sanitäres Einbauteil
- 2: Ventil
- 3: Umstellventil
- 4: Gehäuse
- 5: Anlagefläche
- 6: Anlagefläche
- 7: Gewinde
- 8: Gewinde
- 9: Dichtring
- 10: Auflagefläche
- 11: Gehäuseteil
- 12: Rippe
- 13: Rippe
- 14: Rippe
- 15: Hülse
- 16: Ventilkörper
- 17: Mittelteil
- 18: Dichtring
- 19: Dichtring
- 20: Dichtring
- 21: Gehäuseteil
- 22: Auflagefläche
- 23: Gegenfläche
- 24: Nutgrund
- 25: Nut
- 26: Nut
- 27: Rippe
- 28: Rippe
- 29: Rippe
- 30: Rippe
- 31: Rippe
- 32: Rippe
- 33: Rippe
- 34: Rippe
- 35: Querschnittsfläche
- 36: Querschnittsfläche
- 37: Querschnittsfläche
- 38: Querschnittsfläche
- 39: Axialrichtung
- 40: Durchströmrichtung
- 41: Höhe
- 42: Höhe
- 43: Höhe
- 44: Halbwertsbreite
- 45: Halbwertsbreite
- 46: Halbwertsbreite
- 47: Mitte
- 48: Außenseite
- 49: Außenseite
- 50: Oberteil
- 51: Unterteil
- 52: Lücke
- 53: Durchströmöffnung
- 54: Lücke
- 55: Durchströmöffnung
- 56: Stützstrebe
- 57: Stützstrebe
- 58: oberer Befestigungsbereich
- 59: oberer Befestigungsbereich
- 60: unterer Befestigungsbereich
- 61: unterer Befestigungsbereich
- 62: Umfangsabschnitt
- 63: Umfangsabschnitt
- 64: Umfangsabschnitt
- 65: Umfangsabschnitt
- 66: seitliche Begrenzung
- 67: seitliche Begrenzung
- 68: Stützstrebe
- 69: Stützstrebe
- 70: Befestigungsbereich
- 71: Befestigungsbereich
- 72: Höhe
- 73: Breite
- 74: Einlass
- 75: Außenseite
- 76: Außenseite
- 77: Kreisumfang
- 78: Kreisumfang
- 79: Höhe
- 80: Höhe
- 81: Breite
- 82: Breite
- 83: Tiefe
- 84: Tiefe
- 85: Längsmittelachse
- 86: Längsmittelachse
- 87: Umfangsbereich
- 88: Längsmittelachse
- 89: Auslass
- 90: Auslass
- 91: Handhabe
- 92: Rückstellelement
- 93: Nutgrund
- 94: Seitenfläche
- 95: Seitenfläche
- 100: Sanitärarmatur
- 101: Gegenfläche
- 150: Oberteil
- 151: Unterteil
- 200: Dichtverbindung
- 201: Pressfläche
- 202: Pressfläche

## Patentansprüche

1. Sanitäres Einbauteil (1), insbesondere Ventil (2), mit einem Gehäuse (4) und wenigstens einer an dem Gehäuse (4) ausgebildeten Anlagefläche (5, 6), über die eine mechanische Spannung in das Gehäuse (4) einbringbar ist, wobei das Gehäuse (4) wenigstens einen Oberteil (50, 150) und wenigstens einen Unterteil (51, 151) aufweist, wobei in einer Lücke (52, 54) zwischen dem Oberteil (50, 150) und dem Unterteil (51, 151) wenigstens eine Durchströmöffnung (40, 53, 55) ausgebildet ist, wobei die Lücke (52, 54) von wenigstens einer Stützstrebe (56, 57, 68, 69) überbrückt ist, wobei die Stützstrebe (56, 57, 68, 69) wenigstens einen oberen Befestigungsbereich (58, 59) an dem Oberteil (50, 150) und wenigstens einen unteren Befestigungsbereich (60, 61) an dem Unterteil (51, 151) aufweist, **dadurch gekennzeichnet, dass** die Befestigungsbereiche (58, 59, 60, 61, 70, 71) der Stützstrebe (56, 57, 68, 69) voneinander abweichende Umfangsabschnitte (62, 63, 64, 65) überdecken.

2. Sanitäres Einbauteil (1) nach dem vorangehenden Anspruch, **dadurch gekennzeichnet, dass** eine seitliche Begrenzung (66, 67) der Stützstrebe (56, 57, 68, 69) gegenüber einer Axialrichtung (39) des Einbauteils (1) und/oder einer Durchströmrichtung (40) eines Fluids schräggestellt ist.

3. Sanitäres Einbauteil (1) nach einem der vorangehenden Ansprüche, **dadurch gekennzeichnet, dass** zwei gegeneinander gestellte Stützstreben (56, 57, 68, 69) ausgebildet sind, insbesondere die sich vereinigen und/oder wenigstens einen gemeinsamen Befestigungsbereich (70, 71) aufweisen.

4. Sanitäres Einbauteil (1) nach einem der vorangehenden Ansprüche, **dadurch gekennzeichnet, dass** der von dem oberen Befestigungsbereich (58, 59, 70, 71) und/oder unteren Befestigungsbereich (60, 61, 70, 71) überdeckte Umfangsabschnitt (62, 63, 64, 65) innerhalb des von dem jeweils anderen Befestigungsbereich (58, 59, 60, 61, 70, 71) überdeckten Umfangsabschnitts (62, 63, 64, 65) liegt.

5. Sanitäres Einbauteil (1) nach einem der vorangehenden Ansprüche, **dadurch gekennzeichnet, dass** die Höhe (72) einer Stützstrebe (56, 57, 68, 69) wenigstens 150 %, bevorzugt wenigstens 175 %, besonders bevorzugt wenigstens 200 %, ihrer Breite (73) beträgt.

6. Sanitäres Einbauteil (1) nach einem der vorangehenden Ansprüche, **dadurch gekennzeichnet, dass** sich eine oder die Stützstrebe (56, 57, 68, 69) zu einem oder beiden ihrer Befestigungsbereiche (58, 59, 60, 61, 70, 71) hin erweitert, insbesondere wobei sich die Erweiterung über mehr als 15 %, bevorzugt mehr als 20 %, und/oder weniger als 20 %, bevorzugt weniger als 30 %, der Höhe (72) der Stützstrebe (56, 57, 68, 69) erstreckt.

7. Sanitäres Einbauteil (1) nach einem der vorangehenden Ansprüche, **dadurch gekennzeichnet, dass** die eine Stützstrebe (56, 57, 68, 69) in Umfangsrichtung des sanitären Einbauteils (1) begrenzenden Seitenflächen (94, 95) der Stützstrebe (56, 57, 68, 69) gegeneinander um einen Neigungswinkel zwischen 10° und 40°, bevorzugt zwischen 15° und 30° geneigt sind.

8. Sanitäres Einbauteil (1) nach einem der vorangehenden Ansprüche, **dadurch gekennzeichnet, dass** die oder eine Stützstrebe (56, 57, 68, 69) eine entlang ihres Verlaufs in Axialrichtung veränderliche Querschnittsfläche aufweist.

9. Sanitäres Einbauteil (1) nach einem der vorangehenden Ansprüche, **dadurch gekennzeichnet, dass** mehrere, bevorzugt zwei, durch ein oder mehrere Mittelteile (17) des Gehäuses (4) getrennte, Lücken (52, 54) übereinander angeordnet sind.

10. Sanitäres Einbauteil (1) nach einem der vorangehenden Ansprüche, **dadurch gekennzeichnet, dass** ein durch jeweilige Außenseiten (75, 76) der Stützstreben (56, 57, 68, 69) einer jeweiligen Lücke (52, 54) definierter Kreisumfang (77, 78) für mehrere Lücken (52, 54) unterschiedlich groß ist, insbesondere wobei sich die jeweiligen Kreisumfänge (77, 78) in einer Axialrichtung (39) des Einbauteils (1) und/oder einer Durchströmrichtung (40) eines Fluids verkleinern.

11. Sanitäres Einbauteil (1) nach einem der vorangehenden Ansprüche, **dadurch gekennzeichnet, dass** die jeweiligen Höhen (79, 80) mehrerer Lücken (52, 54) voneinander abweichen, insbesondere sich in einer Axialrichtung (39) des Einbauteils (1) und/oder einer Durchströmrichtung (40) eines Fluids verkleinern.

12. Sanitäres Einbauteil (1) nach einem der vorangehenden Ansprüche, **dadurch gekennzeichnet, dass** die jeweiligen Breiten (81, 82) der Stützstreben (56, 57, 68, 69) mehrerer Lücken (52, 54) voneinander abweichen, insbesondere sich in einer Axialrichtung (39) des Einbauteils (1) und/oder einer Durchströmrichtung (40) eines Fluids verkleinern.

13. Sanitäres Einbauteil (1) nach einem der vorangehenden Ansprüche, **dadurch gekennzeichnet, dass** die jeweiligen Tiefen (83, 84) der Stützstreben (56, 57, 68, 69) mehrerer Lücken (52, 54) voneinander abweichen, insbesondere sich in einer Axialrichtung (39) des Einbauteils (1) und/oder einer Durchströmrichtung (40) eines Fluids vergrößern.

14. Sanitäres Einbauteil (1) nach einem der vorangehenden Ansprüche, **dadurch gekennzeichnet, dass** die Längsmittelachsen (85, 86) wenigstens zweier im selben Umfangsbereich (87) befindlicher Stützstreben (56, 57, 68, 69) wenigstens zweier bevorzugt benachbarter Lücken (52, 54) parallel zueinander ausgerichtet sind.

15. Sanitäres Einbauteil (1) nach einem der vorangehenden Ansprüche, **dadurch gekennzeichnet, dass** das Einbauteil (1) mittels eines Spritzgussverfahrens gefertigt ist.

16. Sanitäres Einbauteil (1) nach einem der vorangehenden Ansprüche, **dadurch kennzeichnet, dass** das Einbauteil (1) als Umstellventil (3) ausgebildet ist.

17. Sanitäres Einbauteil (1) nach einem der vorangehenden Ansprüche, **dadurch gekennzeichnet, dass** ein Einlass (74) und/oder Auslass (89, 90) des Einbauteils (1) radial zu und/oder parallel zu der Längsmittelachse (88) des Einbauteils (1) ausgerichtet ist.

18. Sanitärarmatur (100) mit einem sanitären Einbauteil (1) nach einem der vorangehenden Ansprüche.
